# EUROPEAN PATENT APPLICATION

(11) **EP 3 598 379 A1**
(43) Date of publication of application: **22.01.2020**
(21) Application number: 17900627.5
(22) Date of filing: 26.10.2017
(51) Int. Cl.: G06Q 50/06, H02J 3/00, H02J 3/32, H02J 13/00

(54) **POWER MANAGEMENT DEVICE, POWER MANAGEMENT METHOD, AND PROGRAM**

(30) Priority: 17.03.2017 JP 2017052381
(71) Applicant: NEC Corporation, Tokyo 108-8001 (JP)
(72) Inventor: TAKEUCHI Hiroki, Tokyo 108-8001 (JP); KIMURA Hidekazu, Tokyo 108-8001 (JP)
(74) Representative: Betten & Resch
(86) International application number: PCT/JP2017/038778
(87) International publication number: WO 2018/168053

(57) **Abstract**

The present invention provides a power management apparatus (10) including an acquisition unit (11) that acquires a power purchase request including a power unit price from a power producer, a computation unit (14) that computes a wheeling charge unit price of power for each of pairs of the power producer and a plurality of power consumer groups each having a plurality of power consumers under the control of the same power distribution substation, and a determination unit (12) that determines whether or not to purchase power from the power producer for each power consumer on the basis of a total unit price of the power unit price and a wheeling charge unit price, and a reference unit price of each power consumer.

## Description

### TECHNICAL FIELD

The present invention relates to a power management apparatus, a power management method, and a program.

### BACKGROUND ART

A technique that manages power generated by a power producer has been examined. First, the power producer may be notified of a power generation suppression command for adjustment of power demand and supply balance during a specified time period. When power generation is suppressed in response to the power generation suppression command, use efficiency of a power generation system is degraded. Accordingly, a service has been examined for avoiding power generation suppression of the power producer while maintaining the demand supply balance of power by having power to be suppressed consumed (purchased) by the power consumer during the time period.

Patent Document 1 discloses a surplus power management system in which a power supplier purchases surplus power of a power producer and supplies the purchased power directly from the power producer to a power consumer through a power transmission network. The surplus power management system includes an estimation unit that estimates power demand of the power consumer, a determination unit that determines a power generation plan for transmitting power corresponding to the estimated power demand from the power producer to the power transmission network, and a notification unit that notifies the power producer of the determined power generation plan.

### RELATED DOCUMENT

### PATENT DOCUMENT

[Patent Document 1] Japanese Patent Application Publication No. 2002-271982

### SUMMARY OF THE INVENTION

### TECHNICAL PROBLEM

When an advantage of power consumption (purchase) according to a request from the power producer is insignificant, it is not sufficiently secure power consumers participating in the service. In such a case, there is a problem in that power requested from the power producer cannot be consumed on the power consumer side. An object of the invention is to solve the problem.

### SOLUTION TO PROBLEM

According to the invention, there is provided a power management apparatus including an acquisition unit that acquires a power purchase request including a power unit price from a power producer, a computation unit that computes a wheeling charge unit price of power for each pair of the power producer and each of a plurality of power consumer groups each having a plurality of power consumers under the control of the same power distribution substation, and a determination unit that determines whether or not to purchase power from the power producer for each power consumer on the basis of a total unit price of the power unit price and the wheeling charge unit price and a reference unit price of each of the power consumers.

According to the invention, there is provided a power management method executed by a computer, the method including an acquisition step of acquiring a power purchase request including a power unit price from a power producer, a computation step of computing a wheeling charge unit price of power for each pair of the power producer and each of a plurality of power consumer groups each having a plurality of power consumers under the control of the same power distribution substation; and a determination step of determining whether or not to purchase power from the power producer for each power consumer on the basis of a total unit price of the power unit price and the wheeling charge unit price and a reference unit price of each of the power consumers.

According to the invention, there is provided a program causing a computer to function as an acquisition unit that acquires a power purchase request including a power unit price from a power producer, a computation unit that computes a wheeling charge unit price of power for each pair of the power producer and each of a plurality of power consumer groups each having a plurality of power consumers under the control of the same power distribution substation, and a determination unit that determines whether or not to purchase power from the power producer for each power consumer on the basis of a total unit price of the power unit price and the wheeling charge unit price and a reference unit price of each of the power consumers.

### ADVANTAGEOUS EFFECTS OF INVENTION

According to the invention, it is possible to sufficiently secure the power consumers participating in a service in which the power consumers consume (purchase) according to a power purchase request from the power producer.

### BRIEF DESCRIPTION OF THE DRAWINGS

The above and other objects, features, and advantages will be apparent from preferred example embodiments described below and the following accompanying drawings.
Fig. 1 is an example of a functional block diagram of a power management system of an example embodiment.
Fig. 2 is an example of a functional block diagram of a power storage system of the example embodiment.
Fig. 3 is a diagram conceptually illustrating an example of the hardware configuration of a power management apparatus of the example embodiment.
Fig. 4 is an example of a functional block diagram of the power management apparatus of the example embodiment.
Fig. 5 is an example of a functional block diagram of the power management apparatus of the example embodiment.
Fig. 6 is a diagram illustrating the configuration of a power system.
Fig. 7 is a diagram schematically illustrating an example of information that is processed by the power management apparatus of the example embodiment.
Fig. 8 is a diagram schematically illustrating an example of information that is processed by the power management apparatus of the example embodiment.
Fig. 9 is a diagram schematically illustrating an example of information that is processed by the power management apparatus of the example embodiment.
Fig. 10 is an example of a functional block diagram of the power management system of the example embodiment.
Fig. 11 is a diagram schematically illustrating an example of information that is processed by the power management apparatus of the example embodiment.
Fig. 12 is a flowchart illustrating an example of a processing flow of the power management apparatus of the example embodiment.
Fig. 13 is a diagram schematically illustrating an example of information that is processed by the power management apparatus of the example embodiment.
Fig. 14 is a flowchart illustrating an example of a processing flow of the power management apparatus of the example embodiment.
Fig. 15 is a diagram illustrating the advantageous effects of the power management apparatus of the example embodiment.
Fig. 16 is a diagram illustrating the advantageous effects of the power management apparatus of the example embodiment.
Fig. 17 is a diagram illustrating the advantageous effects of the power management apparatus of the example embodiment.

### DESCRIPTION OF EMBODIMENTS

### <First Example Embodiment>

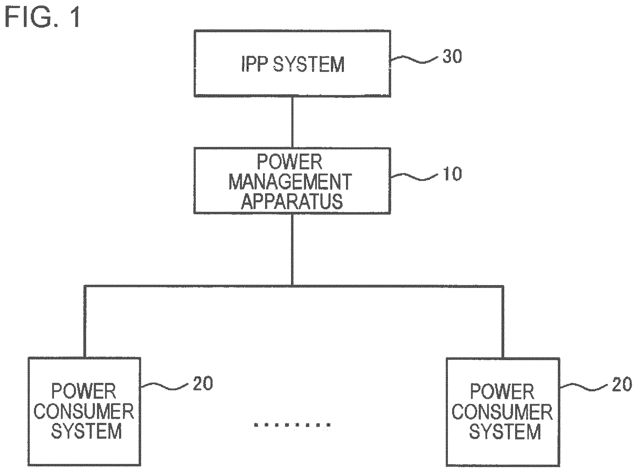

First, the perspective and outline of a power management system of an example embodiment will be described. As illustrated in Fig. 1, the power management system includes a power management apparatus 10, a plurality of power consumer systems 20, and an independent power producer (IPP) system 30. The power management apparatus 10 is an apparatus that belongs to, for example, a resource aggregator. Each power consumer systems 20 are systems that belong to power consumers. The IPP system 30 is a system that belongs to a power producer. The power management apparatus 10, the power consumer systems 20, and the IPP system 30 are connected to one another through a communication network, such as the Internet, and can perform transmission and reception of information with one another. In the following description, the "power producer" may be referred to as an "IPP".

The IPP system 30 transmits a power purchase request to the power management apparatus 10.

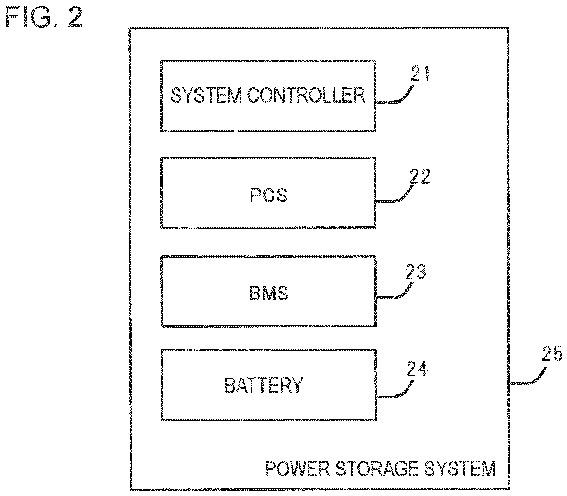

The power consumer system 20 includes a power storage system 25. As illustrated in Fig. 2, the power storage system 25 includes a system controller 21, a power conditioning system (PCS) 22, a battery management system (BMS) 23, and a battery 24.

The system controller 21 controls the entire power storage system 25. The PCS 22 performs conversion of direct-current power and alternating-current power. The battery 24 stores power. The battery 24 includes, for example, a cell stack that stores energy, a battery monitor that monitors a cell temperature and a cell voltage, and the like. The BMS 23 controls the battery 24.

Returning to Fig. 1, when a power purchase request including a power unit price is acquired from the power producer (IPP system 30), the power management apparatus 10 computes a wheeling charge unit price of power for each pair of the power producer and each of a plurality of power consumer groups. Then, the power management apparatus 10 determines whether or not to purchase power from the power producer for each power consumer taking into consideration the power unit price and the wheeling charge unit price.

With the power management apparatus 10 of the example embodiment taking into consideration not only the power unit price proposed from the power producer but also the wheeling charge unit price in transferring power from the power producer to the power consumer, it is possible to determine whether or not there is an advantage of power purchase from the power producer with high accuracy. Then, only in a case where there is truly an advantage, determination can be made that the power consumer is caused to purchase power. For this reason, an advantage to the power consumer of participating in the service becomes significant. As a result, it is possible to sufficiently secure the power consumers participating in the service.

Next, the power management apparatus 10 will be described in detail. First, an example of the hardware configuration of the power management apparatus 10 of the example embodiment will be described. Functional units included in the power management apparatus 10 of the example embodiment are implemented by any combination of hardware and software of any computer centering on a central processing unit (CPU), a memory, a program loaded on the memory, a storage unit (capable of storing programs stored in advance at the time of shipment of the apparatus as well as programs downloaded from a storage medium, such as a compact disc (CD), or a server on the Internet), such as a hard disk that stores the program, and an interface for communication network connection. In addition, those skilled in the art can understand that various modification examples can be made to the implementation method and the apparatus.

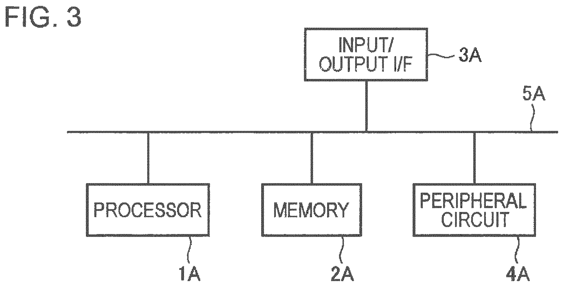

Fig. 3 is a block diagram illustrating the hardware configuration of the power management apparatus 10 of the example embodiment. As illustrated in Fig. 3, the power management apparatus 10 includes a processor 1A, a memory 2A, an input/output interface 3A, a peripheral circuit 4A, and a bus 5A. In the peripheral circuit 4A, various modules are included. It should be noted that the peripheral circuit 4A may not be provided.

It should be noted that the power management apparatus 10 may be implemented by one apparatus integrated physically and/or logically or may be implemented by a plurality of apparatuses separated physically and/or logically. In the latter case, each of a plurality of apparatuses may have the hardware configuration illustrated in Fig. 3. In addition, a plurality of apparatuses may implement a function of the power management apparatus 10 in cooperation.

The bus 5A is a data transmission path through which the processor 1A, the memory 2A, the peripheral circuit 4A, and the input/output interface 3A transmit and receive data with one another. The processor 1A is, for example, an arithmetic processing apparatus, such as a central processing unit (CPU) or a graphics processing unit (GPU). The memory 2A is, for example, a memory, such as a random access memory (RAM) or a read only memory (ROM). The input/output interface 3A includes an interface for acquiring information from an input apparatus (example: a keyboard, a mouse, a microphone, and the like), an external apparatus, an external server, an external sensor, and the like, and an interface for outputting information to an output apparatus (example: a display, a speaker, a printer, a emailer, and the like), the external apparatus, the external server, and the like. The processor 1A can give a command to each module and can perform an arithmetic operation based on an arithmetic result of the module.

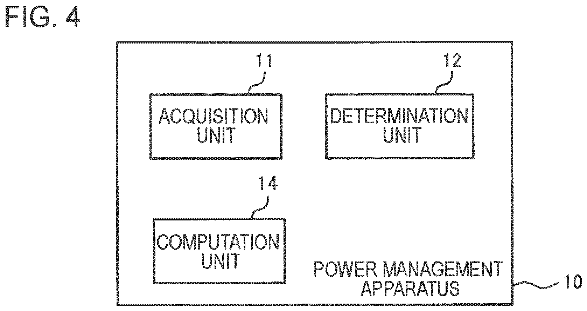

Next, a function of the power management apparatus 10 of the example embodiment will be described in detail. Fig. 4 is an example of a functional block diagram of the power management apparatus 10 of the example embodiment. As illustrated in the drawing, the power management apparatus 10 includes an acquisition unit 11, a determination unit 12, and a computation unit 14.

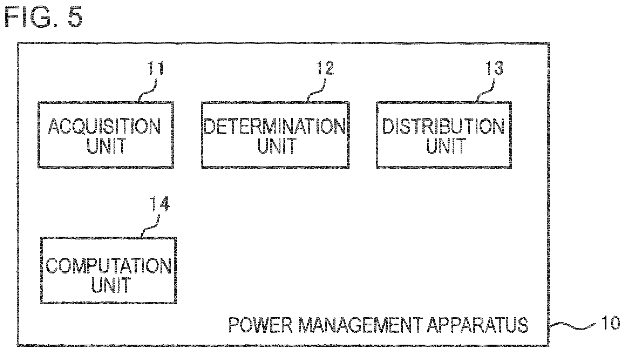

Fig. 5 is another example of a functional block diagram of the power management apparatus 10 of the example embodiment. As illustrated in the drawing, the power management apparatus 10 may include a distribution unit 13 in addition to the acquisition unit 11, the determination unit 12, and the computation unit 14.

The acquisition unit 11 acquires a power purchase request including a power unit price from a power producer (example: from the IPP system 30 of Fig. 1). The power unit price included in the power purchase request is a unit price of power in a case where power is purchased according to the power purchase request from the power producer. The unit is, for example, "yen/kWh". The power unit price can be discretionally determined by each power producer.

The power purchase request may further include a desired power sales amount. The desired power sales amount is a power amount that the power producer wants to have the power consumer purchase. The unit is, for example, "kWh".

The desired power sales amount can be discretionally determined by each power producer. For example, the power producer can set a surplus power amount as the desired power sales amount. The surplus power amount is, for example, a power amount corresponding to the amount for which power generation is suppressed by a power transmission and distribution service provider.

For example, the power transmission and distribution service provider determines a time period during which power generation is suppressed, and notifies the power producer of power generation suppression for setting an output within the time period to be "zero" or notifies the power producer of power generation suppression with an upper limit of the output within the time period. The power producer may compute a surplus power amount on the basis of the content of the power generation suppression and power generation prediction in a case where power generation of the power generation system is not suppressed in the time period during which power generation is suppressed, and may set the surplus power amount as the desired power sales amount.

The power purchase request may further include a power consumption time period. The power consumption time period is a time period during which power is to be received from a power system and to be consumed in a case where power is purchased according to the request from the power producer. The power consumption time period can be discretionally determined by each power producer. For example, the power consumption time period may be a time period during which power generation is suppressed by the power transmission and distribution service provider.

The computation unit 14 computes the wheeling charge unit price of power for each pair of the power producer and each of a plurality of power consumer groups. The wheeling charge unit price is a unit price when power is transferred from the power producer to each power consumer group. The unit is, for example, "yen/kWh". Each power consumer group has a plurality of power consumers under the control of the same power distribution substation.

For example, the computation unit 14 may decide a power transmission route for each pair and may compute the wheeling charge unit price on the basis of the power transmission route. In order to execute these kinds of processes, the computation unit 14 may hold "information relating to the power system", "information relating to a position of the power producer in the power system", and "information relating to a position of each power consumer group" in advance.

"Information relating to the power system", "information relating to the position of the power producer in the power system", and "information relating to the position of each power consumer group in the power system" include information needed for deciding the power transmission route and computing the wheeling charge unit price.

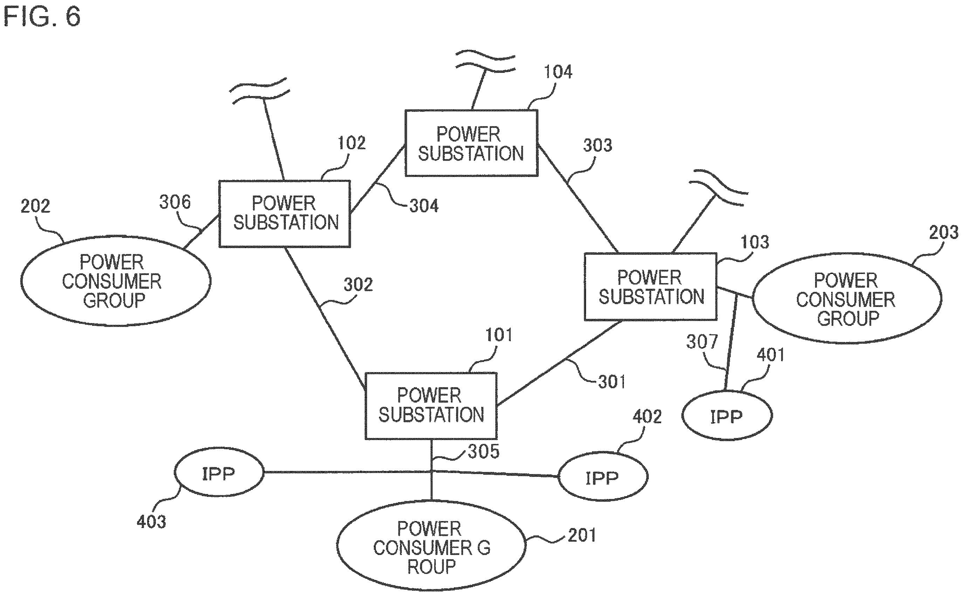

The power system includes many facilities, such as a power generation facility, a power transmission facility, a power transformation facility, a power distribution facility, and a consumer facility, and these facilities are connected to one another. Fig. 6 shows a part of the power system. In the drawing, power distribution substations 101 to 104 are connected to one another through power transmission lines 301 to 304. Facilities of power consumer groups 201 to 203 and facilities of IPPs 401 to 403 are connected to the power distribution substations 101 to 104 through power transmission lines 305 to 307, respectively.

Each of the facilities of the power consumer groups 201 to 203 includes the power storage system 25. Each of the facilities of the IPPs 401 to 403 includes a power generation system. The power generation system may be a system that generates power using natural energy (example: solar light, geothermal heat, wind power, or the like).

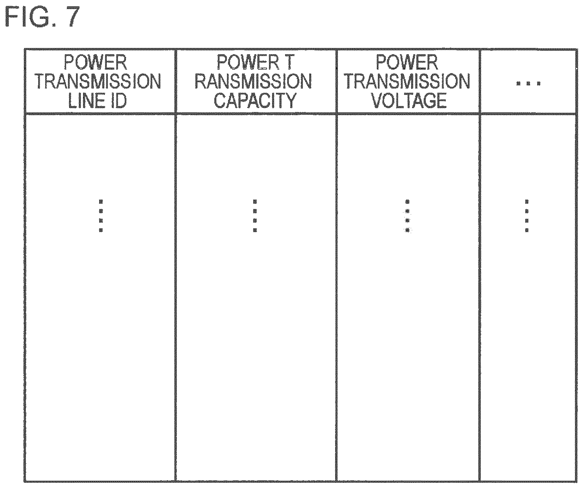

Information relating to the power system includes information indicating the connection among the power distribution substations. Information relating to the power system includes the attributes of the power transmission lines, for example, a power transmission capacity, a power transmission voltage, and the like (see Fig. 7). The power transmission lines are divided into a plurality of sections by any means, and the power transmission capacity, the power transmission voltage, and the like are managed for each section. For example, the power transmission line between two power distribution substations may be determined as one section (in the example of Fig. 6, each of the power transmission lines 301 to 304 is managed as one section).

Information relating to the position of the power producer in the power system includes information indicating a power distribution substation under which the power generation system of each power producer is controlled. Information relating to the position of the power consumer group in the power system includes information indicating a power distribution substation under which the power storage system 25 of each power consumer group is controlled.

The computation unit 14 can decide the power transmission route for each pair of the power producer and each of a plurality of power consumer groups and can compute the wheeling charge unit price on the basis of the above-described information.

For example, for each pair, the computation unit 14 may decide the power transmission route on which the wheeling charge unit price becomes the lowest. The wheeling charge unit price is computed on the basis of, for example, one or a plurality of criteria described below.
- As the number of power distribution substations included in the power transmission route is greater, the wheeling charge unit price is higher. That is, as the number of power distribution substations included in the power transmission route is smaller, the wheeling charge unit price is lower.
- As the power transmission voltage of the power transmission line included in the power transmission route is relatively lower, the wheeling charge unit price is higher. That is, as the power transmission voltage of the power transmission line included in the power transmission route is relatively higher, the wheeling charge unit price is lower.
- As a greater number of sections of the power transmission line with a relatively low power transmission voltage are included in the power transmission route, the wheeling charge unit price is higher. That is, as a greater number of sections of the power transmission line with a relatively high power transmission voltage are included in the power transmission route, the wheeling charge unit price is lower.

It should be noted that the computation unit 14 may decide the power transmission route, in which the wheeling charge unit price becomes the lowest, and a predetermined condition is satisfied. As the predetermined condition, a condition for safety that "a power amount to be transmitted through each power transmission line does not exceed the power transmission capacity of each power transmission line", or the like is exemplified; however, the invention is not limited thereto. For example, the computation unit 14 may determine whether or not each power transmission line can be included in the power transmission route on the basis of the power transmission capacity (see Fig. 7) of each power transmission line and a predicted value of a power transmission amount of each power transmission line in the power consumption time period. For example, in a case where "power transmission capacity > predicted value of power transmission amount + α" is satisfied, determination may be made that the power transmission line can be included in the power transmission route. α is a value equal to or greater than 0, and can be determined according to an output from the power producer, the scale (a total output of the power storage system 25, or the like) of each power consumer group, or the like. Then, for each pair, the computation unit 14 may decide the power transmission route, on which the wheeling charge unit price becomes the lowest, using only the power transmission line determined to be able to be included in the power transmission route.

Returning to Figs. 4 and 5, the determination unit 12 determines whether or not to purchase power from the power producer for each power consumer on the basis of a total unit price of the power unit price and the wheeling charge unit price, and a reference unit price of each power consumer.

Specifically, the determination unit 12 determines whether or not a condition that "the total unit price is lower than the reference unit price" or "the total unit price is lower than the reference unit price by a predetermined level or more (example: lower by a predetermined value or more or lower by a predetermined proportion or more)" is satisfied for each power consumer. Then, in a case where determination is made that the above-described condition is satisfied in a first power consumer, the determination unit 12 determines that the first power consumer purchases power from the power producer.

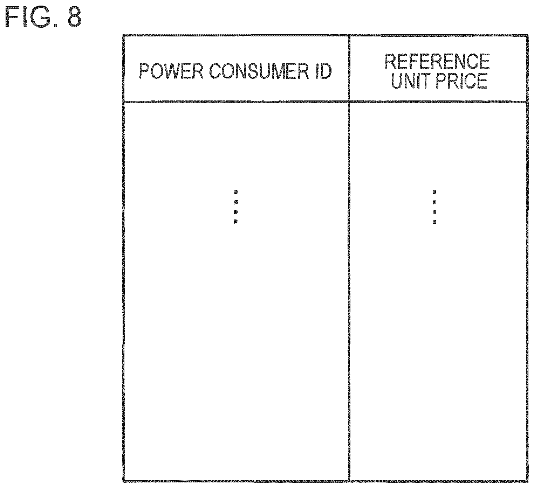

The power management apparatus 10 holds the reference unit price registered in advance for each power consumer (see Fig. 8). The reference unit price can be discretionally determined by each power consumer. For example, the power consumer may set a unit price of power which is usually purchased as the reference unit price or may set a unit price obtained by subtracting a predetermined value from the unit price of power which is usually purchased as the reference unit price.

While the wheeling charge unit price is computed for each power consumer group, the reference unit price is determined for each power consumer. Then, the determination regarding whether or not to purchase power from the power producer is performed for each power consumer.

The distribution unit 13 shown in Fig. 5 distributes the desired power sales amount of the power producer to one or a plurality of power consumers determined to purchase power from the power producer. Each power consumer purchases the distributed amount from the power producer.

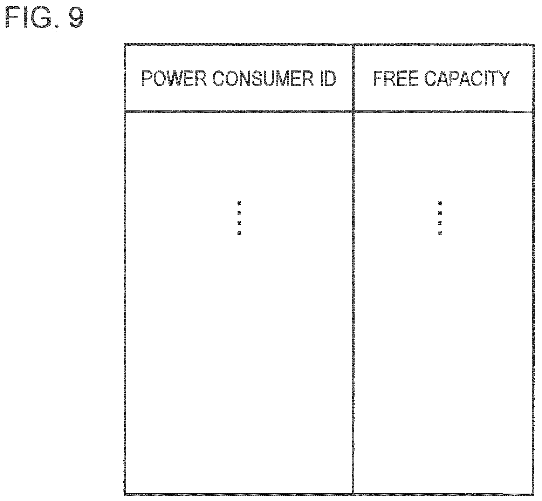

First, the distribution unit 13 predicts a free capacity of the power storage system 25 of each power consumer at a start timing of the power consumption time period. For example, the free capacity of each power storage system 25 at the start timing may be predicted on the basis of the capacity or rated output of each power storage system 25, a charging and discharging schedule (example, nighttime charging and daytime discharging) of each power storage system 25 on the day including the power consumption time period (a day including the power consumption time period: The same applies to the following.), power consumption prediction of each power consumer on the day, in a case where the power consumer has a power generation device (example: a power generation device that generates power using natural energy), power generation prediction of the power generation device, or the like. The prediction can be implemented according to the technique in the related art. The computed value is managed as shown in Fig. 9.

Then, the distribution unit 13 distributes the desired power sales amount of the power producer on the basis of the free capacity (hereinafter, referred to as a "first free capacity") of the power storage system 25 at the start timing in one or a plurality of power consumers determined to purchase power from the power producer.

For example, in a case where the number of power consumers determined to purchase power from the power producer is one, a smaller amount of a first chargeable amount and the desired power sales amount may be distributed to the power consumer. The first chargeable amount is a smaller amount of "the first free capacity of the power storage system 25 of the power consumer" and "a product of the rated output of the power storage system 25 of the power consumer and the duration of the power consumption time period".

In addition, in a case where there are a plurality of power consumers determined to purchase power from the power producer, the desired power sales amount may be distributed to a plurality of power consumers equally. When the number of power consumers determined to purchase power from the power producer is M (M ≥ 2) and the desired power sales amount is D, a distributed amount of each power consumer is D/M. It should be noted that, in a case where there is the power consumer having the first chargeable amount less than D/M, the difference (an amount that cannot be charged) may be distributed to another power consumer.

In addition, in a case where there are a plurality of power consumers determined to purchase power from the power producer, the desired power sales amount may be distributed in order from the power consumer having the lowest reference unit price. It should be noted that a smaller amount of the first chargeable amount and a remaining amount (an amount not yet distributed) of the desired power sales amount may be distributed to each power consumer.

In addition, in a case where there are a plurality of power consumers determined to purchase power from the power producer, the desired power sales amount may be proportionally distributed according to the ratio of a power consumption amount (first chargeable amount) provided from each power consumer.

With the power management apparatus 10 of the example embodiment described above, it is possible to determine for each power consumer whether or not there is an advantage of power purchase from the power producer taking into consideration not only the power unit price but also the wheeling charge unit price. Then, it is possible to determine whether or not each power consumer purchases power from the power producer on the basis of the result.

With the power management apparatus 10 of the example embodiment, it is possible to determine whether or not there is an advantage of power purchase according to the request from the power producer with high accuracy. Then, only in a case where there is truly an advantage, it is possible to allow the power consumer to purchase power. For this reason, an advantage to the power consumer of participating in the service in which the power consumer consume according to the power purchase request from the power producer becomes significant. As a result, it is possible to sufficiently secure the power consumers participating in the service.

With the power management apparatus 10 of the example embodiment that generates the power consumer groups each having a plurality of power consumers under the control of the same power distribution substation and computes the wheeling charge unit price for each power consumer group, it is possible to considerably reduce a processing load compared to a case where the wheeling charge unit price is computed for each power consumer.

With the power management apparatus 10 of the example embodiment that determines whether or not there is an advantage of power purchase from the power producer on the basis of the reference unit price determined in reflection of each individual circumstance for each power consumer, it is possible to determine whether or not there is the advantage in reflection of the circumstance of each power consumer. For this reason, it is possible to determine the presence or absence of an advantage with high accuracy for each power consumer.

The power management apparatus 10 can automatically perform the determination of power purchase without checking with the power consumer every time. For this reason, the accuracy of estimation regarding how much (power amount) surplus power can be purchased increases.

Here, a modification example will be described. The power consumer system 20 may have another power consumption device (example, energy storage system, electrical equipment, or the like) instead of or in addition to the power storage system 25. In this case, the "first chargeable amount" described above can be replaced with an "additional consumable amount". The additional consumable amount is a power amount that is consumed on the power consumer side in addition to normal power consumption in the power consumption time period, and is a power amount represented by a product of power consumption of the power consumption device and a power consumption time. For example, while refrigeration equipment, a vending machine, a heat pump type water heater, or the like performs cooling or heating using electricity at given time intervals, it is possible to allow power to be consumed in addition to normal power consumption by adjusting the timing of cooling or heating to the power consumption time period. Even in the modification example, the same advantageous effects are achieved. It should be noted that the modification example can be applied to all of the following example embodiments.

### <Second Example Embodiment>

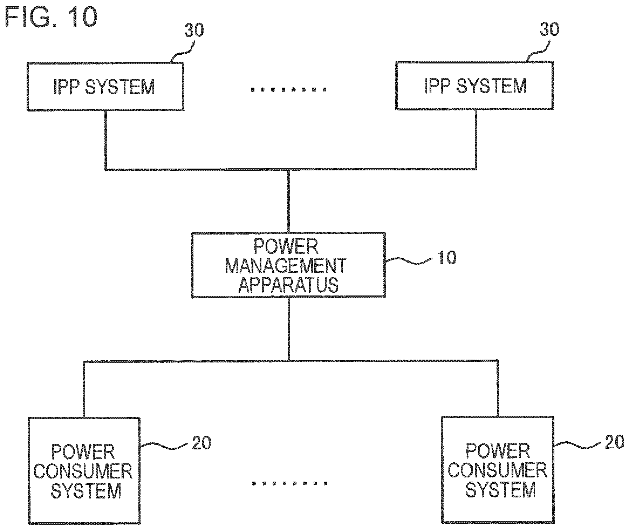

As illustrated in Fig. 10, a power management system of the example embodiment includes a power management apparatus 10, a plurality of power consumer systems 20, and a plurality of IPP systems 30. The power management apparatus 10 of the example embodiment has a unit that, in a case where power purchase requests are acquired from a plurality of power producers (a plurality of IPP systems 30), determines whether or not to purchase power from each power producer for each power consumer. Hereinafter, details will be described.

The configurations of the power consumer system 20 and the IPP system 30 are the same as in the first example embodiment. An example of the hardware configuration of the power management apparatus 10 is the same as in the first example embodiment.

A function of the power management apparatus 10 of the example embodiment will be described in detail. As in the first example embodiment, an example of a functional block diagram of the power management apparatus 10 of the example embodiment is shown in Fig. 4 or 5.

The acquisition unit 11 acquires the power purchase request including the power unit price from each of a plurality of power producers (example: each of IPP systems 30 of Fig. 10). As in the first example embodiment, the power purchase request may include the "power unit price", the "desired power sales amount", the "power consumption time period", and the like.

The computation unit 14 computes the wheeling charge unit price for each pair of each of a plurality of power producers and each of a plurality of power consumer groups. The computation unit 14 can decide the power transmission route and can compute the wheeling charge unit price for each pair. The decision process of the power transmission route and the computation process of the wheeling charge unit price are the same as in the first example embodiment.

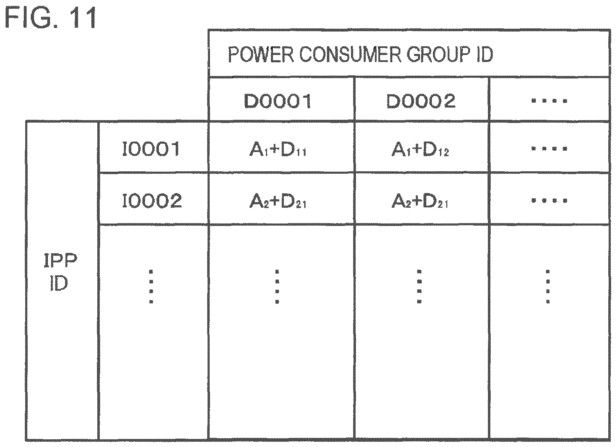

Information shown in Fig. 11 is obtained by the acquisition unit 11 and the computation unit 14. Information shown in Fig. 11 is information indicating the total of the power unit price and the wheeling charge unit price for each pair of each of a plurality of power producers and each of a plurality of power consumer groups. An (where n is a serial number of the power producer) indicates the power unit price of each power producer. Dnm (where n is a serial number of the power producer and m is a serial number of the power consumer group) indicates the wheeling charge unit price corresponding to each pair of the power producer and the power consumer group. The sum of An and Dnm is the total unit price described in the first example embodiment.

The determination unit 12 determines whether or not to purchase power from each of a plurality of power producers for each power consumer on the basis of the total unit price of the power unit price and the wheeling charge unit price, and the reference unit price of each power consumer. The distribution unit 13 distributes the desired power sales amount of a first power producer to one or a plurality of consumers determined to purchase power from the first power producer.

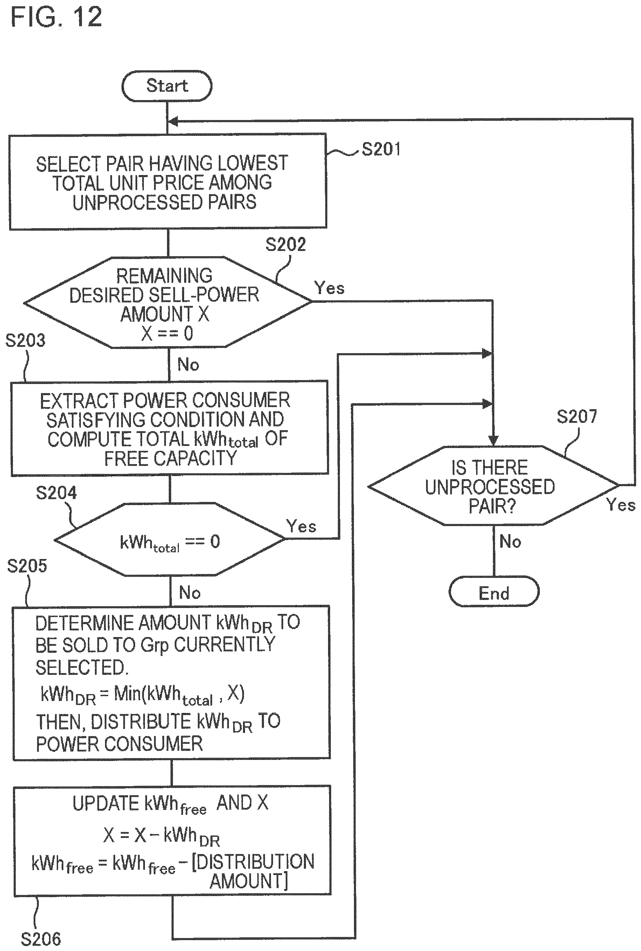

An example of processing that is implemented by the determination unit 12 and the distribution unit 13 after information shown in Fig. 11 is obtained will be described referring to a flowchart of Fig. 12.

In S201, the determination unit 12 decides one pair from among unprocessed pairs as an object to be processed on the basis of the total unit price (see Fig. 11) for each pair of each of a plurality of power producers and each of a plurality of power consumer groups. For example, a pair with the lowest total unit price among unprocessed pairs is decided as an object to be processed. It should be noted that the pair to be processed may be decided with other criteria.

In the following description of the flowchart of Fig. 12, the power producer included in the pair to be processed is referred to as a power producer to be processed. The power consumer group included in the pair to be processed is referred to as a power consumer group to be processed. The power consumer included in the power consumer group to be processed is referred to as a power consumer to be processed.

In S202, the determination unit 12 determines whether or not a remaining desired sell-power amount X of the power producer to be processed is 0. The remaining desired sell-power amount X is an amount that is not yet distributed to the power consumer out of the desired power sales amount of the power producer to be processed. An initial value of the remaining desired sell-power amount X is, for example, the desired power sales amount. Though described below, the value is updated during processing.

In a case where X is 0 (in S202, Yes), that is, in a case where the entire desired power sales amount of the power producer to be processed is distributed to power consumers, the process progresses to S207.

In S207, the determination unit 12 determines whether or not an unprocessed pair remains. In a case where an unprocessed pair remains (in S207, Yes), the process returns to S201, and the determination unit 12 sets another pair as the object to be processed. Then, the same processing is repeated. In a case where no unprocessed pair remains (in S207, No), the processing ends.

In a case where X is not 0 (in S202, No), that is, in a case where an amount not distributed to power consumers out of the desired power sales amount of the power producer to be processed remains, the process progresses to S203. In S203, the determination unit 12 determines whether or not to purchase power from the power producer to be processed in each power consumer to be processed.

That is, the determination unit 12 determines whether or not the condition that "the total unit price is lower than the reference unit price" or "the total unit price is lower than the reference unit price by the predetermined level or more" for each power consumer to be processed. It should be noted that the total unit price used in the determination is the total of "the power unit price of the power producer to be processed" and "the wheeling charge unit price computed corresponding to the pair of the power producer to be processed and the power consumer group to be processed".

Then, the determination unit 12 determines that one or a plurality of power consumers satisfying the condition purchase power from the power producer to be processed. Hereinafter, one or a plurality of power consumers satisfying the condition are referred to as a first consumer to purchase power.

In S203, the distribution unit 13 computes a total kWhₜₒₜₐₗ of free capacities kWh_{free} of the power storage systems 25 of first consumers to purchase power. An initial value of the free capacity kWh_{free} of the power storage system 25 of each power consumer is, for example, the predicted value of the free capacity of each power storage system 25 at the start timing of the power consumption time period. Though described below, the value is updated during processing.

In a case where the total kWhₜₒₜₐₗ of the free capacities kWh_{free} is 0 (in S204, Yes), that is, in a case where the power storage systems 25 of the first consumers to purchase power do not afford to be charged with power of the power producer to be processed, the process progresses to S207.

In S207, the determination unit 12 determines whether or not an unprocessed pair remains. In a case where an unprocessed pair remains (in S207, Yes), the process returns to S201, and the determination unit 12 sets another pair as an object to be processed. Then, the same processing is repeated. In a case where no unprocessed pair remains (in S207, No), the processing ends.

In a case where the total kWhₜₒₜₐₗ of the free capacities kWh_{free} is not 0 (in S204, Yes), that is, in a case where the power storage systems 25 of the first consumers to purchase power afford to be charged with power of the power producer to be processed, the process progresses to S205.

In S205, the distribution unit 13 decides a power amount kWh_{DR} distributed to the power consumer group to be processed. For example, a smaller amount of the total kWhₜₒₜₐₗ and the remaining desired sell-power amount X is set as the power amount kWh_{DR} distributed to the power consumer group to be processed. In addition, the product of the rated output and the duration of the power consumption time period may be computed corresponding to each of the power storage systems 25 of the first consumers to purchase power of which the free capacity kWh_{free} is not 0, and the total of the products may be computed. Then, a smallest value of the total kWhₜₒₜₐₗ, the computed total of the products, and the remaining desired sell-power amount X may be set as the power amount kWh_{DR} distributed to the power consumer group to be processed.

In S205, the distribution unit 13 distributes the power amount kWh_{DR} distributed to the power consumer group to be processed to the first consumers to purchase power.

For example, the distribution unit 13 distributes the desired power sales amount of the power producer on the basis of the free capacity kWh_{free} of the power storage system 25 of each first consumer to purchase power.

For example, in a case where the number of first consumers to purchase power of which the free capacity kWh_{free} is not 0 is one, a smaller amount of a second chargeable amount and the power amount kWh_{DR} may be distributed to the first consumer to purchase power. The second chargeable amount is a smaller amount of the free capacity kWh_{free} of the power storage system 25 of the first consumer to purchase power and the product of the rated output of the power storage system 25 of the first consumer to purchase power and the duration of the power consumption time period.

In addition, in a case where there are a plurality of first consumers to purchase power of which the free capacity kWh_{free} is not 0, the power amount kWh_{DR} may be distributed to the plurality of first consumers to purchase power equally. When the number of first consumers to purchase power of which the free capacity kWh_{free} is not 0 is M (M ≥ 2), the distributed amount of each first consumer to purchase power is kWh_{DR}/M. It should be noted that, in a case where there is the first consumer to purchase power having the second chargeable amount less than the power amount kWh_{DR}/M, the difference (an amount that cannot be charged) may be distributed to other first consumers to purchase power.

In addition, in a case where there are a plurality of first consumers to purchase power of which the free capacity kWh_{free} is not 0, the power amount kWh_{DR} may be distributed in order from the first consumer to purchase power having the lowest reference unit price. It should be noted that a smaller amount of the second chargeable amount and a remaining amount (an amount that is not yet distributed) of the power amount kWh_{DR} may be distributed to each first consumer to purchase power.

In addition, in a case where there are a plurality of first consumers to purchase power of which the free capacity kWh_{free} is not 0, the desired power sales amount may be proportionally distributed according to the ratio of a power consumption amount (second chargeable amount) provided from each first consumer to purchase power of which the free capacity kWh_{free} is not 0.

In S206, the remaining desired sell-power amount X of the power producer to be processed and the free capacity kWh_{free} of the power storage system 25 of each first consumer to purchase power are updated on the basis of the result. Specifically, the remaining desired sell-power amount "X" of the power producer to be processed is substituted with "X - kWh_{DR}". The free capacity "kWh_{free}" of the power storage system 25 of each first consumer to purchase power is substituted with "kWh_{free} - (a value distributed to each power consumer)".

Thereafter, the process progresses to S207. In S207, the determination unit 12 determines whether or not an unprocessed pair remains. In a case where an unprocessed pair remains (in S207, Yes), the process returns to S201, and the determination unit 12 sets another pair as an object to be processed. Then, the same processing is repeated. In a case where no unprocessed pair remains (in S207, No), the processing ends.

Next, another example of a process that is executed by the determination unit 12 and the distribution unit 13 after information shown in Fig. 11 is obtained will be described.

In the example, the determination unit 12 can determine whether or not the total unit price corresponding to each pair is lower than the reference unit price for each power consumer. Then, in a case where determination is made that one or a plurality of total unit prices are lower than the reference unit price of the first power consumer, the determination unit 12 can determine that the first power consumer purchases power from one or a plurality of power producers corresponding to one or a plurality of total unit prices.

Specifically, the determination unit 12 may determine whether or not there is the total unit price satisfying the condition that "the total unit price is lower than the reference unit price" or "the total unit price is lower than the reference unit price by the predetermined level or more" for each power consumer. For example, in a case where a first power consumer included in a power consumer group D0001 of Fig. 11 is set as an object to be processed, the total unit price satisfying the condition can be extracted by comparing the total unit price computed for each pair of the power consumer group and each of a plurality of power producers with the reference unit price of the first power consumer.

Then, in a case where determination is made that there is the total unit price satisfying the condition in the first power consumer, the determination unit 12 determines that the first power consumer purchases power from the power producer corresponding to the total unit price satisfying the condition.

It should be noted that, in a case where there are a plurality of total unit prices satisfying the condition in the first power consumer, the determination unit 12 may determine that the first power consumer purchases power from the power producer corresponding to the lowest total unit price among the plurality of total unit prices satisfying the condition.

In a case where there are a plurality of total unit prices which are the lowest value among a plurality of total unit prices satisfying the condition, the determination unit 12 may determine that the first power consumer purchases power from the power producer corresponding to the total unit price with the lowest wheeling charge unit price among the plurality of total unit prices which are the lowest value.

In addition, in a case where determination is made that there are a plurality of total unit prices satisfying the condition in the first power consumer, the determination unit 12 may determine that the first power consumer purchases power from a plurality of power producers corresponding to the plurality of total unit prices satisfying the condition.

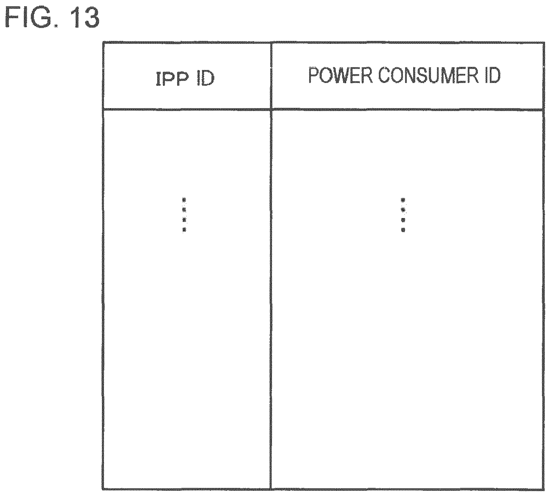

Information shown in Fig. 13 is obtained through the processing in the determination unit 12. Information shown in Fig. 13 is information in which the power consumer determined to purchase power from each power producer is associated with each power producer. It should be noted that a certain power consumer may be associated with a plurality of power producers.

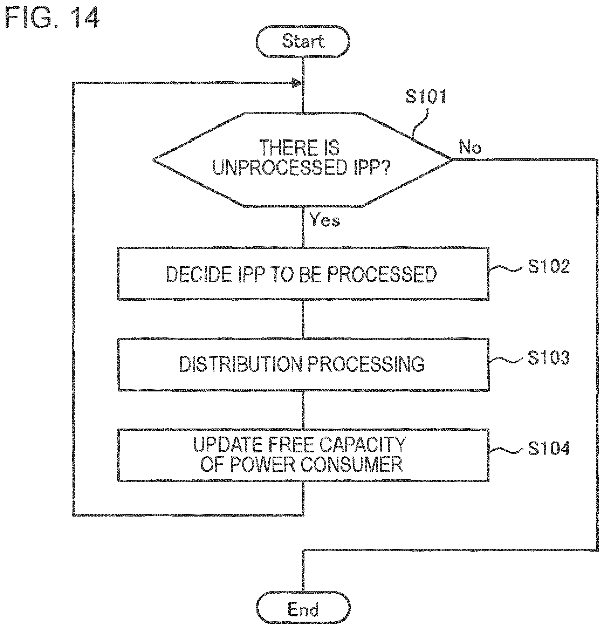

The distribution unit 13 distributes the desired power sales amount of each power producer to the power consumer associated with each power producer in information shown in Fig. 13. An example of a processing flow in the distribution unit 13 will be described referring to a flowchart of Fig. 14.

First, in a case where there is an unprocessed power producer (in S101, Yes), the distribution unit 13 decides the power producer to be processed (S102). For example, the power producer with the lowest power unit price among the unprocessed power producers may be set as an object to be processed. The power producer with the highest power unit price among the unprocessed power producers may be set as an object to be processed. The power producer with the greatest desired power sales amount among the unprocessed power producers may be set as an object to be processed. The power producer with the smallest desired power sales amount among the unprocessed power producers may be set as an object to be processed. It should be noted that the power producer to be processed may be decided with other criteria. In the following description of the flowchart of Fig. 14, the power consumer associated with the power producer to be processed in information shown in Fig. 13 is referred to as a second consumer to purchase power.

In S103, the desired power sales amount of the power producer to be processed is distributed to the second consumer to purchase power. For example, the distribution unit 13 distributes the desired power sales amount of the power producer to be processed on the basis of the free capacity kWh_{free} of the power storage system 25 of each second consumer to purchase power. The initial value of the free capacity kWh_{free} of the power storage system 25 of each power consumer is, for example, the predicted value of the free capacity of each power storage system 25 at the start timing of the power consumption time period. Though described below, the value is updated during processing.

For example, in a case where the number of second consumers to purchase power of which the free capacity kWh_{free} is not 0 is one, a smaller amount of a third chargeable amount and "the desired power sales amount of the power producer to be processed" may be distributed to the second consumer to purchase power. The third chargeable amount is a smaller value of the free capacity kWh_{free} of the power storage system 25 of the second consumer to purchase power and the product of the rated output of the power storage system 25 of the second consumer to purchase power and the duration of the power consumption time period.

In addition, in a case where there are a plurality of second consumers to purchase power of which the free capacity kWh_{free} is not 0, the desired power sales amount of the power producer to be processed may be distributed to a plurality of second consumers to purchase power equally. When the number of second consumers to purchase power of which the free capacity kWh_{free} is not 0 is M (M ≥ 2) and the desired power sales amount of the power producer to be processed is D, the distributed amount of each second consumer to purchase power is D/M. It should be noted that, in a case where there is the second consumer to purchase power having the third chargeable amount less than D/M, the difference (an amount that cannot be charged) may be distributed to other second consumers to purchase power.

In addition, in a case where there are a plurality of second consumers to purchase power of which the free capacity kWh_{free} is not 0, the desired power sales amount of the power producer to be processed may be distributed in order from the second consumer to purchase power having the lowest reference unit price. It should be noted that a smaller amount of the third chargeable amount and a remaining amount (an amount that is not yet distributed) of the desired power sales amount of the power producer to be processed may be distributed to each second consumer to purchase power.

In addition, in a case where there are a plurality of second consumers to purchase power of which the free capacity kWh_{free} is not 0, the desired power sales amount may be proportionally distributed according to the ratio of a power consumption amount (third chargeable amount) provided from each second consumer to purchase power of which the free capacity kWh_{free} is not 0.

In S104, the free capacity kWh_{free} of the second consumer to purchase power is updated. Specifically, the free capacity "kWh_{free}" of the power storage system 25 of each second consumer to purchase power is substituted with "kWh_{free} - (a value distributed to each power consumer)".

Thereafter, the process returns to S101, and the same processing is repeated.

With the power management apparatus 10 of the example embodiment described above, the same advantageous effects as in the first example embodiment can be implemented.

With the power management apparatus 10 of the example embodiment, in a case where there are the power purchase requests from a plurality of power producers, the desired power sales amount of each power producer can be distributed to a plurality of power consumers while securing the profits of the power consumers.

With the power management apparatus 10 of the example embodiment, in a case where there are a plurality of total unit prices satisfying the predetermined condition in the first power consumer, that is, in a case where there is an advantage of power purchase from a plurality of power producers, determination can be made that the first power consumer purchases power from the power producer with the lowest total unit price among the plurality of total unit prices satisfying the condition. With the power management apparatus 10 of the example embodiment, it is possible to secure the advantages of power consumers.

With the power management apparatus 10 of the example embodiment, in a case where there are a plurality of total unit prices which are the lowest value among a plurality of total unit prices satisfying the condition, determination can be made that the first power consumer purchases power from the power producer corresponding to the total unit price with the lowest wheeling charge unit price among the plurality of total unit prices which are the lowest value. With the power management apparatus 10 of the example embodiment, it is possible to minimize loss due to power transmission while securing the advantages of the power consumers.

With the power management apparatus 10 of the example embodiment, in a case where there are a plurality of total unit prices satisfying the predetermined condition in the first power consumer, that is, in a case where there is an advantage of power purchase from a plurality of power producers, determination can be made that the first power consumer purchases power from the plurality of power producers. Power is purchased from the plurality of power producers, whereby it is possible to increase the total amount of the purchase amount. As a result, it is possible to utilize the free capacity fully and to purchase inexpensive power.

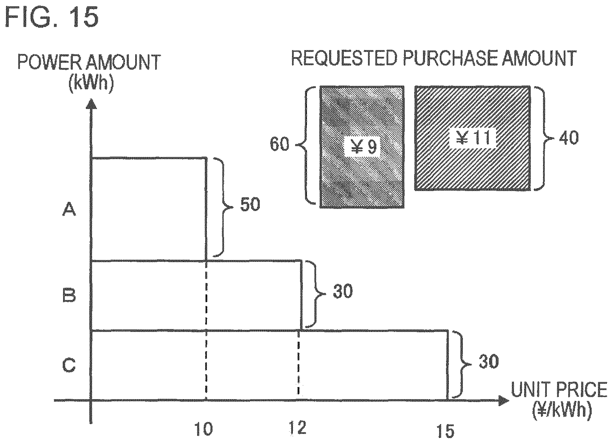

Advantageous effects according to a difference among ways of distribution in the distribution unit 13 will be described referring to Figs. 15 to 17.

It is assumed that power consumers A to C belong to the same power consumer group. The reference unit prices of the power consumers A to C are 10 yen/kWh, 12 yen/kWh, and 15 yen/kWh, respectively. The initial values of the free capacities kWh_{free} of the power storage systems 25 of the power consumers A to C are 50 kWh, 30 kWh, and 30 kWh, respectively.

Then, as shown in Fig. 15, it is assumed that there are the power purchase requests from two power producers. It is assumed that the total unit price of the first power producer is 9 yen/kWh, and the desired power sales amount is 60 kWh. It is assumed that the total unit price of the second power producer is 11 yen/kWh, and the desired power sales amount is 40 kWh.

It should be noted that, for simplification of description, the number of power consumers, the desired power sales amount, and the like are shown on small scale.

For example, the distribution unit 13 can set first the power producer with a smaller total unit price as an object to be processed in consideration of the advantages of the power consumers and can distribute the desired power sales amount of the power producer to a plurality of power consumers. Hereinafter, the desired power sales amount of the power producer to be processed will be referred to as a power amount to be distributed. Then, the distribution unit 13 can distribute the power amount to be distributed to a plurality of power consumers determined to purchase power equally.

In the example of Fig. 15, first, the first power producer (the total unit price is 9 yen/kWh and the desired power sales amount is 60 kWh) becomes an object to be processed. Here, since the total unit price of the first power producer is lower than any of the reference unit prices of the power consumers A to C, determination is made that all of the power consumers A to C purchase power from the first power producer.

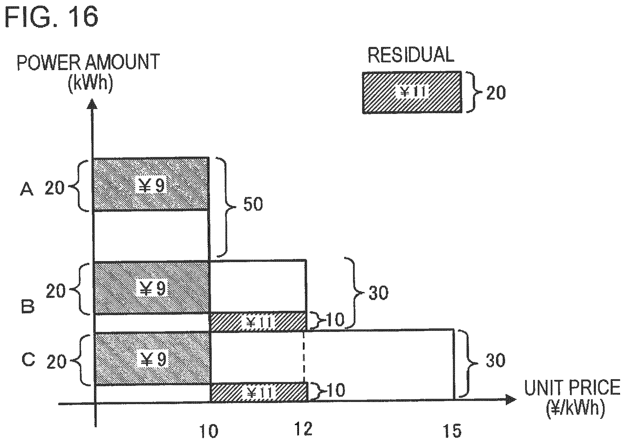

Then, the distribution unit 13 distributes the power amount to be distributed "60 kWh" to the power consumers A to C equally. Specifically, as shown in Fig. 16, power, the total unit price of which is 9 yen/kWh, is distributed to the power consumers A to C by 20 kWh.

As a result, the free capacities kWh_{free} of the power storage systems 25 of the power consumers A to C are updated to 30 kWh, 10 kWh, and 10 kWh, respectively.

Next, the second power producer (the total unit price is 11 yen/kWh and the desired power sales amount is 40 kWh) becomes an object to be processed. Here, since the total unit price of the second power producer is lower than the reference unit prices of the power consumers B and C, determination is made that the power consumers B and C purchase power from the second power producer. In contrast, since the total unit price of the second power producer is lower than the reference unit price of the power consumer A, determination is made that the power consumer A does not purchase power from the second power producer.

Then, the distribution unit 13 distributes the power amount to be distributed "40 kWh" to the power consumers B and C equally. In this case, 20 kWh is distributed to each of the power consumers B and C. However, in both of the power consumers B and C, the free capacity kWh_{free} is 10 kWh. For this reason, as shown in Fig. 16, power, the total unit price of which is 11 yen/kWh, is distributed to the power consumers B and C by 10 kWh.

As a result, 20 kWh out of the desired power sales amount of the second power producer is not distributed and remains. In this case, the power management apparatus 10 can notify the second power producer of that effect. The second power producer can correct the sales price or the desired power sales amount on the basis of the notification.

In the distribution example, it is possible to distribute inexpensive power to a plurality of power consumer fairly. That is, it is possible to secure fairness. As a result, it is possible to sufficiently secure the power consumers participating in the service in which the power consumers consume (purchase) according to the power purchase request from the power producer.

It should be noted that the distribution unit 13 can execute a process for distributing the power sales amount in order from the power consumer having the lowest reference unit price, instead of the process for distributing the desired power sales amount to a plurality of power consumers equally.

Even in the process, the distribution unit 13 can first set the power producer of which the total unit price is smaller, as an object to be processed in consideration of the advantages of the power consumers, and can distribute the desired power sales amount of the power producer to a plurality of power consumers.

In the example of Fig. 15, first, the first power producer (the total unit price is 9 yen/kWh and the desired power sales amount is 60 kWh) becomes an object to be processed. Here, since the total unit price of the first power producer is lower than the reference unit prices of all of the power consumers A to C, determination is made that all of the power consumers A to C purchase power from the first power producer.

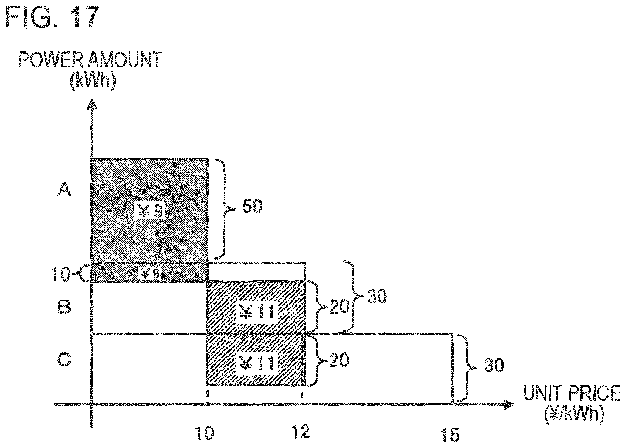

Then, the distribution unit 13 distributes the power amount to be distributed "60 kWh" as the desired power sales amount in order from the power consumer having the lowest reference unit price. Specifically, as shown in Fig. 17, out of power, the total unit price of which is 9 yen/kWh, 50 kWh is distributed to the power consumer A, and 10 kWh is distributed to the power consumer B.

As a result, the free capacities kWh_{free} of the power storage systems 25 of the power consumers A to C are updated to 0 kWh, 20 kWh, and 30 kWh, respectively.

Next, the second power producer (the total unit price is 11 yen/kWh and the desired power sales amount is 40 kWh) becomes an object to be processed. Here, since the total unit price of the second power producer is lower than the reference unit prices of the power consumers B and C, determination is made that the power consumers B and C purchase power from the second power producer. Since the total unit price of the second power producer is lower than the reference unit price of the power consumer A, determination is made that the power consumer A does not purchase power from the second power producer.

Then, the distribution unit 13 distributes the power amount to be distributed "40 kWh" as the desired power sales amount in order from the power consumer having the lowest reference unit price. Specifically, as shown in Fig. 17, out of power, the total unit price of which is 11 yen/kWh, 20 kWh is distributed to the power consumer B, and 20 kWh is distributed to the power consumer C.

As a result, the desired power sales amounts of the first power producer and the second power producer are distributed to the power consumers and do not remain undistributed.

In the distribution example, it is possible to distribute the desired power sales amounts of a plurality of power producers to the power consumers without remaining undistributed as much as possible. Since determination is made that the power consumer purchases power only in a case where the predetermined condition is satisfied, an advantage of the power consumer is secured. As a result, it is possible to sufficiently secure the power customers participating in the service in which the power consumers consume (purchase) according to the power purchase request from the power producer. A trade contract rate is increased, whereby an increase in the number of power producers participating in the service is expected.

Here, a modification example will be described. The acquisition unit 11 may receive power purchase requests of a plurality of patterns from one power producer. The power purchase requests of a plurality of patterns received from one power producer are different in at least one of the "power unit price", the "desired power sales amount", and the "power consumption time period". In this case, the determination unit 12 may perform the above-described determination based on the total unit price computed for each pair of each of the power purchase requests of one or a plurality of patterns of each power producer and each of a plurality of power consumer groups.

Hereinafter, examples of reference example embodiments will be added below.
1. A power management apparatus including
   an acquisition unit that acquires a power purchase request including a power unit price from a power producer,
   a computation unit that computes a wheeling charge unit price of power for each pair of the power producer and each of a plurality of power consumer groups each having a plurality of power consumers under the control of the same power distribution substation, and
   a determination unit that determines whether or not to purchase power from the power producer for each of the power consumers on the basis of a total unit price of the power unit price and the wheeling charge unit price and a reference unit price of each power consumer.
2. The power management apparatus according to 1,
   in which the determination unit determines whether or not the total unit price is lower than the reference unit price for each power consumer, and in a case where determination is made that the total unit price is lower than the reference unit price of a first power consumer, determines that the first power consumer purchases power from the power producer.
3. The power management apparatus according to 1,
   in which the acquisition unit acquires the power purchase request from each of a plurality of the power producers, and
   the computation unit computes the wheeling charge unit price for each pair of each of the plurality of the power producers and each of a plurality of the power consumer groups.
4. The power management apparatus according to 3,
   in which the determination unit determines whether or not the total unit price corresponding to each of a plurality of the pairs is lower than the reference unit price for each power consumer, and in a case where determination is made that one or a plurality of the total unit prices are lower than the reference unit price of a first power consumer, determines that the first power consumer purchases power from one or a plurality of the power producers corresponding to the one or the plurality of the total unit prices.
5. The power management apparatus according to 4,
   in which, in a case where determination is made that a plurality of the total unit prices are lower than the reference unit price of the first power consumer, the determination unit determines that the first power consumer purchases power from the power producer corresponding to the lowest total unit price among the plurality of the total unit prices.
6. The power management apparatus according to 5,
   in which, in a case where there are a plurality of the total unit prices which are the lowest value among the plurality of the total unit prices, the determination unit determines that the first power consumer purchases power from the power producer corresponding to the total unit price with the lowest wheeling charge unit price among the plurality of the total unit prices which are the lowest value.
7. The power management apparatus according to any one of 1 to 6,
   in which the computation unit decides a power transmission route for each pair on the basis of a power transmission capacity and a predicted value of a power transmission amount of a power transmission line, and computes the wheeling charge unit price on the basis of the power transmission route.
8. The power management apparatus according to 7,
   in which the computation unit computes the wheeling charge unit price on the basis of at least one of the number of power distribution substations included in the power transmission route and a power transmission voltage of a power transmission line included in the power transmission route.
9. The power management apparatus according to 8,
   in which the computation unit computes the wheeling charge unit price higher as the number of power distribution substations included in the power transmission route is greater.
10. The power management apparatus according to 8 or 9,
   in which, in a case where a power transmission line with a relatively low power transmission voltage is included in the power transmission route, the computation unit computes the wheeling charge unit price higher than in a case where a power transmission line with a relatively low power transmission voltage is not included in the power transmission route.
11. The power management apparatus according to 8 or 9,
   in which the computation unit computes the wheeling charge unit price higher as a greater number of sections of a power transmission line with a relatively low power transmission voltage are included in the power transmission route.
12. The power management apparatus according to any one of 1 to 11,
   in which the power purchase request further includes a desired power sales amount,
   the power management apparatus further including:
   a distribution unit that distributes, to one or a plurality of the power consumers determined to purchase power from a first power producer, the desired power sales amount of the first power producer.
13. The power management apparatus according to 12,
   in which the distribution unit distributes the desired power sales amount of the first power producer on the basis of a free capacity of a power storage system of the power consumer.
14. The power management apparatus according to 12 or 13,
   in which the distribution unit distributes the desired power sales amount in order from the power consumer having the lowest reference unit price.
15. The power management apparatus according to 12 or 13,
   in which the distribution unit distributes the desired power sales amount to the plurality of the power consumers equally.
16. A power management method executed by a computer, the method including:
   an acquisition step of acquiring a power purchase request including a power unit price from a power producer,
   a computation step of computing a wheeling charge unit price of power for each pair of the power producer and each of a plurality of power consumer groups each having a plurality of power consumers under the control of the same power distribution substation, and
   a determination step of determining whether or not to purchase power from the power producer for each of the power consumers on the basis of a total unit price of the power unit price and the wheeling charge unit price and a reference unit price of each power consumer.
17. A program causing a computer to function as:
   an acquisition unit that acquires a power purchase request including a power unit price from a power producer;
   a computation unit that computes a wheeling charge unit price of power for each pair of the power producer and each of a plurality of power consumer groups each having a plurality of power consumers under the control of the same power distribution substation; and
   a determination unit that determines whether or not to purchase power from the power producer for each of the power consumers on the basis of a total unit price of the power unit price and the wheeling charge unit price and a reference unit price of each power consumer.

This application claims priority based on Japanese Patent Application No. 2017-052381 filed on March 17, 2017, the entire disclosure of which is incorporated herein by reference.

## Claims

1. A power management apparatus comprising:
an acquisition unit that acquires a power purchase request including a power unit price from a power producer;
a computation unit that computes a wheeling charge unit price of power for each pair of the power producer and each of a plurality of power consumer groups each having a plurality of power consumers under the control of the same power distribution substation; and
a determination unit that determines whether or not to purchase power from the power producer for each of the power consumers on the basis of a total unit price of the power unit price and the wheeling charge unit price and a reference unit price of each power consumer.

2. The power management apparatus according to claim 1,
wherein the determination unit determines whether or not the total unit price is lower than the reference unit price for each power consumer, and in a case where determination is made that the total unit price is lower than the reference unit price of a first power consumer, determines that the first power consumer purchases power from the power producer.

3. The power management apparatus according to claim 1,
wherein the acquisition unit acquires the power purchase request from each of a plurality of the power producers, and
the computation unit computes the wheeling charge unit price for each pair of each of the plurality of the power producers and each of a plurality of the power consumer groups.

4. The power management apparatus according to claim 3,
wherein the determination unit determines whether or not the total unit price corresponding to each of a plurality of the pairs is lower than the reference unit price for each power consumer, and in a case where determination is made that one or a plurality of the total unit prices are lower than the reference unit price of a first power consumer, determines that the first power consumer purchases power from one or a plurality of the power producers corresponding to the one or the plurality of the total unit prices.

5. The power management apparatus according to claim 4,
wherein, in a case where determination is made that a plurality of the total unit prices are lower than the reference unit price of the first power consumer, the determination unit determines that the first power consumer purchases power from the power producer corresponding to the lowest total unit price among the plurality of the total unit prices.

6. The power management apparatus according to claim 5,
wherein, in a case where there are a plurality of the total unit prices which are the lowest value among the plurality of the total unit prices, the determination unit determines that the first power consumer purchases power from the power producer corresponding to the total unit price with the lowest wheeling charge unit price among the plurality of the total unit prices which are the lowest value.

7. The power management apparatus according to any one of claims 1 to 6,
wherein the computation unit decides a power transmission route for each pair on the basis of a power transmission capacity and a predicted value of a power transmission amount of a power transmission line, and computes the wheeling charge unit price on the basis of the power transmission route.

8. The power management apparatus according to claim 7,
wherein the computation unit computes the wheeling charge unit price on the basis of at least one of the number of power distribution substations included in the power transmission route and a power transmission voltage of a power transmission line included in the power transmission route.

9. The power management apparatus according to claim 8,
wherein the computation unit computes the wheeling charge unit price higher as the number of power distribution substations included in the power transmission route is greater.

10. The power management apparatus according to claim 8 or 9,
wherein, in a case where a power transmission line with a relatively low power transmission voltage is included in the power transmission route, the computation unit computes the wheeling charge unit price higher than in a case where a power transmission line with a relatively low power transmission voltage is not included in the power transmission route.

11. The power management apparatus according to claim 8 or 9,
wherein the computation unit computes the wheeling charge unit price higher as a greater number of sections of a power transmission line with a relatively low power transmission voltage are included in the power transmission route.

12. The power management apparatus according to any one of claims 1 to 11,
wherein the power purchase request further includes a desired power sales amount,
the power management apparatus further comprising:
a distribution unit that distributes, to one or a plurality of the power consumers determined to purchase power from a first power producer, the desired power sales amount of the first power producer.

13. The power management apparatus according to claim 12,
wherein the distribution unit distributes the desired power sales amount of the first power producer on the basis of a free capacity of a power storage system of the power consumer.

14. The power management apparatus according to claim 12 or 13,
wherein the distribution unit distributes the desired power sales amount in order from the power consumer having the lowest reference unit price.

15. The power management apparatus according to claim 12 or 13,
wherein the distribution unit distributes the desired power sales amount to the plurality of the power consumers equally.

16. A power management method executed by a computer, the method comprising:
an acquisition step of acquiring a power purchase request including a power unit price from a power producer;
a computation step of computing a wheeling charge unit price of power for each pair of the power producer and each of a plurality of power consumer groups each having a plurality of power consumers under the control of the same power distribution substation; and
a determination step of determining whether or not to purchase power from the power producer for each of the power consumers on the basis of a total unit price of the power unit price and the wheeling charge unit price and a reference unit price of each power consumer.

17. A program causing a computer to function as:
an acquisition unit that acquires a power purchase request including a power unit price from a power producer;
a computation unit that computes a wheeling charge unit price of power for each pair of the power producer and each of a plurality of power consumer groups each having a plurality of power consumers under the control of the same power distribution substation; and
a determination unit that determines whether or not to purchase power from the power producer for each of the power consumers on the basis of a total unit price of the power unit price and the wheeling charge unit price and a reference unit price of each power consumer.
